(19) Europäisches Patentamt / European Patent Office / Office européen des brevets

(11) **EP 3 700 764 B1**

(12) **EUROPÄISCHE PATENTSCHRIFT**

(45) Veröffentlichungstag und Bekanntmachung des Hinweises auf die Patenterteilung:
**21.07.2021   Patentblatt 2021/29**

(21) Anmeldenummer: **18778832.8**

(22) Anmeldetag: **14.09.2018**

(51) Int Cl.:
**B60G 17/04** *(2006.01)*     **B60G 11/30** *(2006.01)*

(86) Internationale Anmeldenummer:
**PCT/EP2018/074842**

(87) Internationale Veröffentlichungsnummer:
**WO 2019/081122 (02.05.2019 Gazette 2019/18)**

(54) **FEDER-DÄMPFERSYSTEM MIT VARIABLER FEDERRATE**

SPRING-ABSORBER SYSTEM WITH VARIABLE SPRING RATE

SYSTÈME AMORTISSEUR À RESSORT, À CONSTANTE DE RAPPEL VARIABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.10.2017   DE 102017218905**

(43) Veröffentlichungstag der Anmeldung:
**02.09.2020   Patentblatt 2020/36**

(73) Patentinhaber: **Bayerische Motoren Werke Aktiengesellschaft**
**80809 München (DE)**

(72) Erfinder:
• **DIETRICH, Maximilian**
  **82229 Seefeld (DE)**
• **SCHATZBERGER, Uwe**
  **84172 Buch (DE)**
• **SCHRÖDER, Johannes**
  **83734 Hausham (DE)**

(56) Entgegenhaltungen:
| | |
|---|---|
| EP-A2- 1 757 473 | WO-A1-2011/034702 |
| DE-A1- 2 604 809 | DE-A1- 4 226 754 |
| DE-U1- 8 905 062 | DE-U1- 8 905 062 |
| JP-A- S5 326 021 | JP-A- H03 281 418 |
| JP-A- 2004 276 854 | JP-A- 2006 242 277 |
| US-A- 4 975 849 | US-A- 5 347 457 |

**Beschreibung**

Die Erfindung betrifft ein Feder-Dämpfersystem insbesondere für eine Radaufhängung eines Kraftfahrzeuges mit einer variablen Federrate.

Bei der Auslegung von Feder-Dämpfersystemen ergibt sich ein Zielkonflikt zwischen einem durch das Feder-Dämpfersystem erreichbaren Fahrkomfort und einer erreichbaren Fahrdynamik.

Zum einen kann das Feder-Dämpfersystem möglichst komfortabel (hoher Fahrkomfort) ausgelegt werden, was z.B. durch eine geringe Federrate (auch als Federkonstante bezeichnet) realisierbar ist. Eine komfortable Abstimmung des Feder-Dämpfersystems hat jedoch Einschränkungen im Bereich der Sportlichkeit und Sicherheit des Fahrverhaltens des Kraftfahrzeugs zur Folge (schlechte Fahrdynamik).

Zum anderen kann das Feder-Dämpfersystem auf eine möglichst gute Dynamik bzw. Sportlichkeit abgestimmt werden (gute Fahrdynamik). Dafür wird eine hohe Federrate eingesetzt, womit Einschränkungen im Fahrkomfort entstehen.

Um eine variable Abstimmung des Feder-Dämpfersystems zu ermöglichen und damit zwischen einer sportlichen und einer komfortablen Abstimmung des Feder-Dämpfersystems variieren zu können, sind im Stand der Technik verschiedene aktive Feder-Dämpfersysteme bekannt.

Die Federrate der Feder-Dämpfersysteme wird bei den im Stand der Technik bekannten Systemen zum Teil über eine in ihrer Federrate variable Luftfeder gesteuert. Nachteilig ist jedoch, dass die zu erzeugenden Drücke der Luft in einem Aggregat erzeugt werden müssen, das einen hohen Steueraufwand und sowohl einen hohen Bauraum- als auch einen hohen Energiebedarf hat.

Andere bekannte Systeme greifen beispielsweise auf in Reihe wirkende Federpakete aus Stahlfedern zurück, die stabil ausgelegt werden müssen um den abzufedernden Massen standzuhalten. Durch die stabile Auslegung weisen die Federpakete hohe Gewichte und einen hohen Bauraumbedarf auf, was insbesondere vor dem Hintergrund des Energieverbrauchs bei Kraftfahrzeugen von großem Nachteil ist. Zudem ist die mit einem solchen System darstellbare Spreizung zwischen der Fahrkomfort- und Fahrdynamikeinstellung sowie deren Variabilität gering.

Im Stand der Technik sind zudem Systeme bekannt, bei denen die Feder des Feder-Dämpfersystems Kräfte, die durch die Fahrzeugmassen erzeugt werden, direkt auf das Fluid im Dämpfer überträgt. Dadurch entstehen in dem Dämpfer und allen weiteren von Fluid durchströmten Bauteilen sehr hohe Drücke, sodass der Dämpfer und die weiteren Bauteile entsprechend stabil ausgelegt werden müssen. Dadurch erhöht sich sowohl das Gewicht des Systems, als auch der Bauraum. Zudem müssen Dichtungen für die hohen Drücke ausgelegt werden, sodass diese teurer werden und eine kürzere Lebenszeit aufweisen, als Dichtungen, die für weniger hohe Drücke ausgelegt werden müssen. Ferner ist die Federrate bei einem solchen System meist abhängig vom Hub des Dämpfers, sodass über den gesamten Federweg keine gleichbleibende Federrate gewährleistet werden kann. Bei konstanter Beladung kann die Federrate zumeist nicht oder nur mit Hilfe eines zusätzlichen Aktors verstellt werden, sodass die Funktionalität eingeschränkt ist oder nur durch zusätzliche Kosten bei einem erhöhten Bauraumbedarf und einem erhöhten Gewicht hergestellt werden kann.

Weitere Feder-Dämpfersysteme für eine Radaufhängung eines Kraftfahrzeugs, welche Zusatzfedermodule mit Zusatzbehältern lehren sind zudem beispielsweise aus den Veröffentlichungsschriften US 5 347 457 A, WO 2011/034702 A1, DE 89 05 062 U1, EP 1 757 473 A2,

JP 2006 242277 A, US 4 975 849A und JP S53 26021 A bekannt. DE 89 05 062 U1 offenbart jedoch ein gattungsblidende Feder-Dämpfersystem nach dem Oberbegriff des Anspruchs 1.

Der Erfindung liegt deshalb die Aufgabe zugrunde ein Feder-Dämpfersystem bereitzustellen, das eine steuerbare Gesamtfederkonstante aufweist einen geringen Bauraumbedarf hat und schnell sowie ohne großen Energieaufwand zwischen verschiedenen Gesamtfederkonstanten umschalten kann. Diese Aufgabe wird durch die Merkmalskombination gemäß Patentanspruch 1 gelöst.

Erfindungsgemäß wird hierzu ein Feder-Dämpfersystem für eine Radaufhängung eines Kraftfahrzeugs bzw. eines Einspurkraftfahrzeugs vorgeschlagen. Das Feder-Dämpfersystem umfasst hierfür eine Tragfeder mit einer Federkonstanten $k_T$ und einen zu der Tragfeder parallelgeschalteten und parallelwirkenden sowie mit einem Fluid gefüllten Dämpfer. Das Feder-Dämpfersystem umfasst ferner zumindest zwei Zusatzfedermodule. Jedes Zusatzfedermodul weist jeweils einen Zusatzbehälter auf, wobei jeder Zusatzbehälter ein Zusatzbehältervolumen umfasst. Das Zusatzbehältervolumen ist von einer Zusatzfeder mit einer Federkonstante $k_n$ druckbeaufschlagt. Die Zusatzfeder kann in oder an dem Zusatzbehälter angeordnet sein. Die Zusatzbehältervolumen der Zusatzfedermodule sind jeweils über eine rohrartige Fluidleitung strömungswirksam mit einem Dämpferabschnitt des Dämpfers verbunden. Der Dämpferabschnitt des Dämpfers weist ein Dämpferabschnittvolumen auf, das bei der Druckstufe des Dämpfers reduziert wird. Ferner umfasst zumindest ein Zusatzfedermodul der zumindest zwei Zusatzfedermodule ein steuerbares Sperrventil, mit dem die jeweilige Fluidleitung des jeweiligen Zusatzfedermoduls sperrbar ist. Das Feder-Dämpfersystem kann beispielsweise in eine Telegabel eines Einspurkraftfahrzeugs integriert sein oder eine solche umfassen.

Das den Dämpfer und die Zusatzfederelemente durchströmende Fluid ist insbesondere ein Öl. Die Tragfeder und der Dämpfer stützen eine Masse des Kraftfahrzeugs gegen eine der Fahrzeugachsen ab. Der Dämpfer ist vorzugsweise innerhalb der als Spiralfeder ausgebildeten Tragfeder angeordnet, sodass Tragfeder und Dämpfer eine kompakte Baueinheit bilden.

Der Dämpfer weist in seinem Inneren zwei von einem Kolben getrennte Innenvolumen auf. Der Kolben wird beim Ein- oder Ausfedern des Feder-Dämpfersystems durch eine Kolbenstange verschoben, sodass sich die zwei Innenvolumen des Dämpfers ändern. Beim Ausfedern des Feder-Dämpfersystems wird der Dämpfer auf Zug (Zugstufe) und beim Einfedern auf Druck (Druckstufe) beansprucht. Die Innenvolumen des Dämpfers verändern daher bei der Druckstufe und der Zugstufe ihr jeweiliges Volumen. Das Fluid in den jeweiligen Innenvolumen strömt zum Teil und abhängig von der Bewegung von einem Innenvolumen des Dämpfers durch Ventile in den anderen Teil des Innenvolumens. Das Gesamtinnenvolumen des Dämpfers bleibt über Druck- und Zugstufe jedoch nicht konstant, da der Dämpfer mit eingefahrener Kolbenstange, durch das Volumen der Kolbenstange in dem Dämpfer, ein geringeres Gesamtvolumen aufweist als der Dämpfer mit ausgefahrener Kolbenstange. Die Differenz der Gesamtvolumen (Differenzvolumen) wird bei der Erfindung während der Druckstufe in die Zusatzfedermodule gepresst. Daher sind die Zusatzfedermodule strömungstechnisch direkt mit dem Dämpferabschnitt des Dämpfers verbunden, dessen Innenvolumen bzw. dessen Dämpferabschnittvolumen bei der Druckstufe des Dämpfers reduziert wird, sodass das Fluid bei der Druckstufe des Dämpfers in die Zusatzfedermodule und bei der Zugstufe des Dämpfers aus den Zusatzfedermodulen in den Dämpfer strömen kann. Die Tragfeder übernimmt die Hauptfederarbeit und weist vorzugsweise eine Federkonstante zwischen 100 und 200 N/mm auf. Die Zusatzfedern der Zusatzfedermodule stellen durch ihre Federwege die mit dem Feder-Dämpfersystem abzubildende Spreizung, also den Abstand zwischen den möglichen Gesamtfederkonstanten (bzw. Gesamtfederraten), dar. Durch die Aufgabenteilung zwischen der Tragfeder, welche die Hauptfederarbeit übernimmt, und den Zusatzfedern, welche die die Spreizung realisierende Zusatzfederarbeit übernehmen, ist das gesamte Feder-Dämpfersystem auf verschiedene Arten im Fahrzeug und besonders platzsparend anordenbar, sodass das vorgeschlagene Feder-Dämpfersystem einen besonders günstigen Bauraumbedarf aufweist.

Aus der Verschaltung der Tragfeder mit den Zusatzfedern der Zusatzfedermodule ergibt sich, dass die Zusatzfedern der Zusatzfedermodule zueinander in Reihe wirken und die in Reihe geschalteten Zusatzfedern gemeinsam parallel zu der Tragfeder wirken.

Daher ist die Gesamtfederkonstante $k_G$ des Feder-Dämpfersystems, die Summe aus der Federkonstante $k_T$ der Tragfeder und der Gesamtzusatzfederkonstante $k_{Gn}$ der Zusatzfedern, die auf strömungswirksam mit dem Dämpferabschnitt verbundene Zusatzbehälter druckbeaufschlagend wirken. Strömungswirksam mit dem Dämpferabschnitt sind hierbei nur jene Zusatzbehälter verbunden, bei denen die Strömung des Fluids durch die Fluidleitung nicht von einem Sperrventil gesperrt ist.

Die Formel für die Gesamtfederkonstante $k_G$ lautet daher:

$$k_G = k_T + k_{Gn}$$

Die Gesamtzusatzfederkonstante $k_{Gn}$ ergibt sich aufgrund der Reihenschal-tung aus dem Kehrwert der Summe aller Kehrwerte der Federkonstanten $k_n$.

Dies gilt jedoch nur, wenn das hydraulische Übersetzungsverhältnis des Dämpfers zu jedem der Zusatzfedermodule identisch ist, sodass eine von außen auf den Dämpfer wirkende und die Hydraulikflüssigkeit aus dem Dämpfer in die Zusatzfedermodule pressende Kraft gleichmäßig auf die Zusatzfedermodule bzw. auf die Zusatzfedern verteilt wird, sodass jeweils eine identische Kraft an den Zusatzfedern wirkt.

Bei einem identischen hydraulischen Übersetzungsverhältnis zwischen dem Dämpfer zu jedem der Zusatzfedermodule bzw. bei einem Übersetzungsverhältnis von 1:1 zwischen den Zusatzfedermodulen gilt daher für die Gesamtzusatzfederkonstante $k_{Gn}$ die Formel

$$k_{Gn} = \left( \sum \frac{1}{k_n} \right)^{-1}$$

gilt, wobei nur jene Federkonstanten $k_n$ einfließen, deren Zusatzfedern einen nicht durch das jeweilige Sperrventil von dem Dämpfer strömungstechnisch getrennten Zusatzbehälter druckbeaufschlagen.

Für die Gesamtfederrate $k_G$ gilt in diesem Fall somit die Formel:

$$k_G = k_T + \left( \sum \frac{1}{k_n} \right)^{-1}$$

Ist das hydraulische Übersetzungsverhältnis zwischen den Zusatzfedermodulen nicht 1:1, beispielsweise durch Unterschiedliche Wirkflächen über welche die Hydraulikflüssigkeit auf die jeweilige Zusatzfeder wirkt, bzw. wirken auf die Zusatzfedern durch die Hydraulikflüssigkeit unterschiedlich große Kräfte kann die Gesamtzusatzfederkonstante $k_{Gn}$ nicht nach obiger Formel berechnet werden, da die einzelnen wirkenden Zusatzfederkonstanten $k_n$ in Abhängigkeit der auf die jeweilige Feder wirkende Kraft in die daraus resultierende Gesamtzusatzfederkonstante eingehen.

Vorteilhaft ist ferner eine Ausbildungsform, bei der zumindest ein Zusatzfedermodul der zumindest zwei Zusatzfedermodule ein parallel zu dem Sperrventil wirkendes Drosselventil umfasst. Das Drosselventil drosselt die Strömung durch die jeweilige Fluidleitung dann, wenn das zugehörige Sperrventil die ungedrosselte Strömung zwischen dem jeweiligen Zusatzbehälter des Zusatzfedermoduls und dem Dämpfer sperrt. Wird das Sperrventil zur Steuerung der Gesamtfederrate des Feder-Dämpfersystems angesteuert und von seiner Durchflussstellung in seine Sperrstellung gebracht, bleibt in dem durch das Sperrventil abgetrennten Zusatzbehälter (Sperrstellung) der momentan herrschende Druck erhalten. Wird das Sperrventil zu einem späteren Zeitpunkt wieder in eine den Durchfluss durch das Sperrventil ermöglichende Stellung (Durchflussstellung) gebracht und hat sich der Druck in dem Dämpfer zwischenzeitlich verändert, kann es zu einem plötzlichen Druckausgleich zwischen den verschiedenen Abschnitten des Feder-Dämpfersystems kommen, sodass der Dämpfer, bedingt durch den beim Druckausgleich auftretenden Druckschlag, die Kolbenstange ruckartig ein- oder ausschiebt. Durch das Drosselventil kann sich der Druck zwischen den Abschnitten langsam aneinander anpassen, sodass es zu keinem Differenzdruck zwischen den Abschnitten und damit auch nicht zu einem plötzlichen Druckausgleich kommen kann. Das Drosselventil kann in seiner Drosselung einstellbar und ansteuerbar ausgebildet sein um den Durchfluss des Fluids durch das Drosselventil gezielt steuern zu können.

Um den Druckausgleich gezielt steuern zu können, sieht eine vorteilhafte Weiterbildung vor, dass zumindest eines der Zusatzfedermodule ein den Fluidstrom von dem Dämpfer zu dem jeweiligen Zusatzbehälter durch das Drosselventil sperrendes Rückschlagventil umfasst, das in Reihe zu dem Drosselventil und parallel zu dem Sperrventil geschalten ist. Statt des Rückschlagventils kann das jeweilige Zusatzfedermodul auch ein zweites steuerbares Sperrventil umfassen.

Die jeweilige Zusatzfeder eines Zusatzfedermoduls der zumindest zwei Zusatzfedermodule ist bei einer weiteren vorteilhaften Ausbildungsform eine Gasdruckfeder oder eine Schraubenfeder. Alternativ können die Federn auch durch eine Gummifeder, eine Luftfeder oder eine andere das Zusatzbehältervolumen druckbeaufschlagende Feder gebildet werden. Die verschiedenen Zusatzfedern der Zusatzfedermodule des Feder-Dämpfersystems können jeweils durch eine andere Federart gebildet werden. Vorzugsweise wird eine Zusatzfeder durch eine auf Stickstoff basierende Gasdruckfeder gebildet, welche eine Federkonstante von 1 bis 2 N/mm aufweist.

Um durch das gesteuerte Absperren der Sperrventile verschiedene Federkonstanten erzeugen zu können sieht eine besonders vorteilhafte Weiterbildung vor, dass sich die Federkonstanten $k_n$ voneinander unterscheiden.

Vorteilhaft ist ferner, wenn eine einzige Federkonstante $k_n$ aller Federkonstanten $k_n$ zwischen 1 und 2 N/mm beträgt. Vorteilhaft ist ferner, wenn die anderen Federkonstanten $k_n$ zwischen 10 und 50 N/mm aufweisen.

Aufgrund des Zusatzfedermoduls mit der Zusatzfeder, die eine sehr kleine Federkonstante $k_n$ von insbesondere zwischen 1 und 2 N/mm aufweist, ergibt sich für den Fall, in dem das Zusatzfedermodul mit der sehr kleinen Federkonstante $k_n$ zu der Gesamtzusatzfederkonstante $k_{Gn}$ beiträgt, ein sehr geringer Wert für die Gesamtzusatzfederkonstante $k_{Gn}$, der kleiner oder gleich der sehr kleinen Federkonstante $k_n$ ist. Dadurch entspricht die Gesamtfederkonstante $k_G$ des Feder-Dämpfersystems im Wesentlichen der Federkonstante $k_T$ der Tragfeder. Die Zusatzbehälter dienen in diesem Fall lediglich als Ausgleichsbehälter für das durch die Kolbenstange verdrängte Volumen.

Die Federkonstanten $k_n$ der Zusatzfedern sind in einer vorteilhaften Weiterbildung der Zusatzfedermodule ein Vielfaches voneinander. Alternativ können sich die einzelnen Federkonstanten $k_n$ durch feste Zwischenwerte ergeben, sodass die Federkontanten $k_n$ beispielsweise in Zehnerschritten ansteigende Werte sind. Unabhängig davon, ob die Federkonstanten sich durch feste Zwischenwerte ergeben oder ein Vielfaches voneinander sind, kann einer Zusatzfeder eine sehr geringe und von den anderen Federkonstanten $k_n$ unabhängige Federkonstante $k_n$ aufweisen, sodass die Zusatzbehälter der Federmodule als Ausgleichsbehälter für das Fluid wirken können.

Erfindungsgemäß ist der Zusatzbehälter ein Zylinder mit zwei in ihrem jeweiligen Volumen variablen, von einem verschiebbaren Trennkolben getrennten Zylinderkammern. Eine erste Zylinderkammer der zwei Zylinderkammern des Zylinders ist als das Zusatzbehältervolumen über die jeweilige Fluidleitung mit dem Dämpferabschnitt verbunden, dessen Dämpferabschnittvolumen bei der Druckstufe des Dämpfers reduziert wird. Eine zweite Zylinderkammer der zwei Kammern des Zylinders nimmt die jeweilige Zusatzfeder des jeweiligen Zusatzfedermoduls auf. Die in der zweiten Zylinderkammer aufgenommene Zusatzfeder wirkt mittels des Trennkolbens druckbeaufschlagend auf die erste Zylinderkammer und stützt sich hierfür an dem Zylinder ab.

Um mehrere Zusatzfedermodule material- und bauraumsparend integral auszubilden, sieht eine vorteilhafte Weiterbildung vor, dass zumindest zwei Zusatzfedermodule einen gemeinsamen Zylinder aufweisen. Der gemeinsame Zylinder weist zumindest drei, jeweils durch einen Trennkolben getrennte Zylinderkammern auf. Die erste Zylinderkammer nimmt die Zusatzfeder eines ersten Zusatzfedermoduls und eine dritte Zylinderkammer die Zusatzfeder eines zweiten Zusatzfedermoduls auf. Die Zusatzfedern stützen sich jeweils an dem gemeinsamen Zylinder ab und können gemeinsam druckbeaufschlagend auf die zweite Zylinderkammer wirken. Alternativ können die beiden Zusatzfedern jeweils auf eine Zylinderkammer druckbeaufschlagend wirken, wobei dann die Zusatzfeder in der ersten Zylinderkammer druckbeaufschlagend auf die zweite Zylinderkammer wirkt und die Zusatzfeder in der dritten Zylinderkammer druckbeaufschlagend auf eine vierte Zylinderkammer. Liegen die zweite und die vierte Zylinderkammer direkt benachbart zueinander, sind diese durch eine zwischen ihnen angeordnete Wandung voneinander getrennt ausgebildet.

Zur Verbesserung des Ansprechverhaltens der Zusatzfedermodule bzw. der Trennkolben ist erfindungsgemäß vorgesehen, dass der Trennkolben eine Membran zwischen einer der Zylinderkammern und einem von dem Trennkolben gebildeten Hohlraum aufweist. Die Membran wird von einem in der Zylinderkammer wirkenden Druck in den Hohlraum gedrückt oder in die Zylinderkammer gesogen. Bei einem geringen Druck, der nicht ausreicht den gesamten Trennkolben zu bewegen, wirkt die Membran als Federelement, sodass auch bei dem geringem Druck eine Federarbeit geleistet wird. Bei ausreichend hohem Druck wird der gesamte Trennkolben verschoben. Dadurch wird das Ansprechverhalten des Zusatzfedermoduls verbessert, sodass dieses bei einer Druckänderung in der Zylinderkammer schneller bzw. schon bei niedrigeren Drücken eine Federarbeit leistet. Somit wird auch der sogenannte Slip-Stick-Effekt des Trennkolbens reduziert, da der Trennkolben erst bei ausreichend hohen Drücken bewegt wird und bei einem darunter liegenden Druck die Federarbeit durch die Membran verrichtet wird.

Um ein besonders kompaktes und bauraumsparendes Feder-Dämpfersystem realisieren zu können, sieht eine Weiterbildung vor, dass zumindest ein Zusatzfedermodul der Zusatzfedermodule integral mit dem Dämpfer und eine Baueinheit bildend ausgebildet ist. Der Dämpfer mit dem integral ausgebildeten Zusatzfedermodul ist vorzugsweise innerhalb der Tragfeder angeordnet, um insgesamt ein kompakte Feder-Dämpfersystem zu bilden.

Erfindungsgemäß wird ferner Verfahren zur Steuerung der Federkonstanten des Feder-Dämpfersystems vorgeschlagen. Hierzu wird ein erfindungsgemäßes Feder-Dämpfersystem wie vorangehend beschrieben verwendet. Zur Einstellung bzw. Steuerung der Federkonstante wird/werden das/die Sperrventil(e) der zumindest zwei Zusatzfedermodule jeweils durch eine Sperrventilsteuerung in Abhängigkeit einer zu erreichenden Gesamtfederkonstante $k_G$ den Fluidstrom zwischen den jeweiligen Zusatzbehältern und dem Dämpferabschnitt, dessen Dämpferabschnittvolumen bei der Druckstufe des Dämpfers reduziert wird, sperrend (Sperrstellung) oder freigebend (Durchflussstellung) angesteuert . Durch die Ansteuerung und den vorangehend beschriebenen Aufbau ergibt sich für die Gesamtfederkonstante $k_G$, zumindest bei einem gleichen hydraulischen Übersetzungsverhältnis zwischen Dämpfer und jedem der Zusatzfedermodule, die Formel

$$k_G = k_T + \left( \sum \frac{1}{k_n} \right)^{-1}$$

In eine Summe aus den Kehrwerten der Federkonstanten $k_n$ gehen hierbei nur die Federkonstanten $k_n$ der Zusatzfedermodule ein, deren Sperrventile in einer den Fluidstrom zwischen den jeweiligen Zusatzbehältervolumen und dem Dämpferabschnittvolumen freigebenden Stellung (Durchflussstellung) sind.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Fig. 1    ein Feder-Dämpfersystem mit zwei Zusatzfedermodulen;

Fig. 2    ein Feder-Dämpfersystem mit vier Zusatzfedermodulen;

Fig. 3    ein Feder-Dämpfersystem mit zwei integral miteinander ausge-bildeten Zusatzfedermodulen.

Die Figuren sind beispielhaft schematisch. Gleiche Bezugszeichen in den Figuren weisen auf gleiche funktionale und/oder strukturelle Merkmale hin.

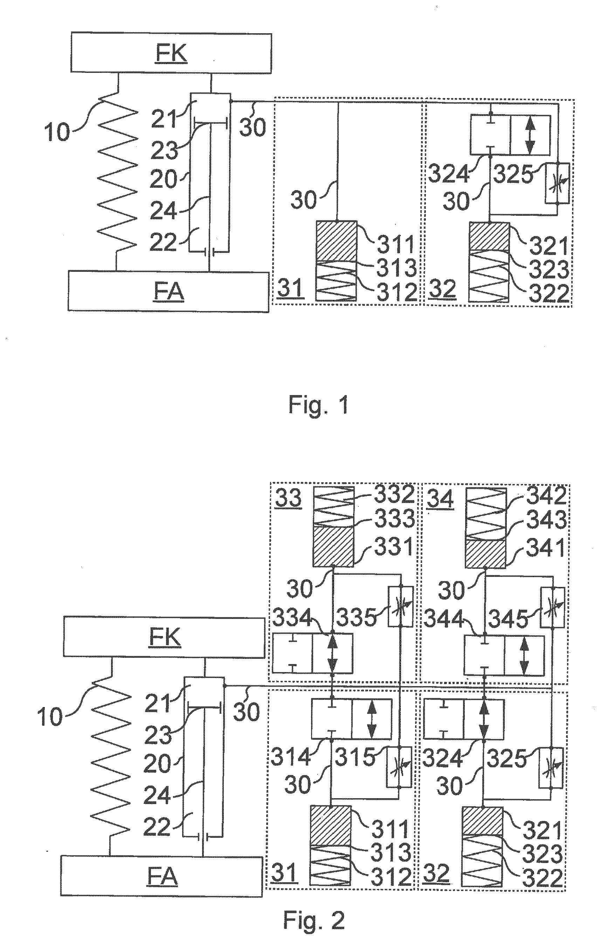

Figuren 1 bis 3 zeigen jeweils ein erfindungsgemäßes Feder-Dämpfersystem, die sich jeweils nur durch ihre jeweiligen Zusatzfedermodule unterscheiden. Die Fahrzeugkarosserie FK und die Fahrzeugachse FA werden gegenüber einander durch die Tragfeder 10 abgestützt, wobei der Dämpfer 20 die Bewegungen und die dabei entstehenden Kräfte dämpft. Der Dämpfer 20 ist ein an der Fahrzeugkarosserie FK abgestützter Zylinder, in den sich von der Fahrzeugsachse FA aus die Kolbenstange 24 hinein erstreckt. Die Kolbenstange 24 ist in dem Zylinder an einem Kolben 23 fixiert und dadurch ausgebildet, den Kolben 23 durch eine Bewegung der Kolbenstange 24 in dem Zylinder zu verschieben. Der Zylinder des Dämpfers 20 wird durch den Kolben 23 in einen ersten und einen zweiten Dämpferabschnitt 21, 22 getrennt, die jeweils ein Dämpferabschnittsvolumen bestimmen. Die Dämpferabschnitte 21, 22 und die jeweils zugehörigen Dämpferabschnittsvolumen, verkleinern bzw. vergrößern sich in Abhängigkeit der Bewegung der Kolbenstange 24 und des Kolbens 23. Bewegt sich die Kolbenstange 24 in den Zylinder hinein (Druckstufe), wird der erste Dämpferabschnitt 21 und das zugehörige Dämpferabschnittsvolumen kleiner sowie der zweite Dämpferabschnitt 22 und das zugehörige Dämpferabschnittsvolumen größer, bewegt sich die Kolbenstange 24 aus dem Zylinder heraus (Zugstufe), wird der erste Dämpferabschnitt 21 und das zugehörige Dämpfabschnittsvolumen größer sowie der zweite Dämpferabschnitt 22 und das zugehörige Dämpferabschnittsvolumen kleiner.

In Fig. 1 sind zwei Zusatzfedermodule 31, 32 über eine Fluidleitung 30 mit dem ersten Dämpferabschnitt 21 bzw. dem Dämpferabschnittvolumen verbunden. Das Zusatzfedermodul 31 umfasst einen mit dem Fluid gefüllten als Zylinder 311 ausgebildeten Zusatzbehälter. Das Fluid in dem Zylinder 311 ist mittels des Trennkolbens 313 von einer Zusatzfeder 312 druckbeaufschlagt, sodass die Federkraft der Zusatzfeder 312 einen Druck auf das Fluid ausübt, der über die Fluidleitung 30 in den Dämpfer 20 und durch den Dämpfer 20 auf die Fahrzeugkarosserie FK und die Fahrzeugachs FA übertragen werden. Dadurch, dass das Sperrventil 324 des zweiten Zusatzfedermoduls 32 in einer die Fluidleitung zu dem als Zylinder 321 ausgebildeten Zusatzbehälter unterbrechenden Stellung (Sperrstellung) ist, wirkt die Zusatzfeder 322 nicht auf ein strömungswirksam mit dem Dämpfer 20 verbundenes Fluid. Daher wirkt die zweite Zusatzfeder 322 nicht auf die Fahrzeugkarosserie FK und die Fahrzeugachse FA. Bei dem in Figur 1 dargestellten Schaltzustand des Sperrventils 324 wirken die Zusatzfeder 312 und die Tragfeder 10 parallel zueinander, sodass sich die Gesamtfederkonstante $k_{G1}$ des Feder-Dämpfersystems der Figur 1 aus der Summe der Federkonstanten $k_T$ der Tragfeder und der Federkonstanten $k_{31}$ des ersten Zusatzfedermoduls ergibt ($k_n$, wobei n durch die Bezeichnung des wirkenden Zusatzfedermoduls 31 ersetzt ist). In Figur 1 ergibt sich die Gesamtfederkonstante somit aus der Formel $k_{G1} = k_T + k_{31}$. Die Federkonstante $k_{32}$ der Zusatzfeder 322 ist um ein Vielfaches kleiner als die Federkonstante $k_{31}$, sodass durch ein Schalten des Sperrventils 324 von der dargestellten Sperrstellung in eine die Verbindung zu dem Dämpfer herstellende Durchflussstellung die Gesamtfederrate $k_G$ im Wesentlichen $k_T$ entsprechen würde.

Bei dem in Figur 2 dargestellten Federdämpfersystem sind die vier Zusatzfedermodule 31, 32, 33, 34 jeweils mit einem Sperrventil 314, 324, 334, 344 ausgebildet, zu dem jeweils strömungstechnisch parallel ein Drosselventil 315, 325, 335, 345 geschaltet ist, sodass es bei einem hohen Differenzdruck zwischen den Zusatzfedermodulen 31, 32, 33, 34 oder dem Dämpfer 20 zu einem langsamen Druckausgleich kommen kann. Die Zusatzfedermodule verfügen jeweils über einen Zylinder 311, 321, 331, 341 in denen ein Fluid jeweils mittels eines Trennkolbens 313, 323, 333, 343 von einer Zusatzfeder 312, 322, 332, 342 druckbeaufschlagt wird. Die Sperrventile 324, 334 des zweiten und dritten Zusatzfedermoduls sind in ihrer jeweiligen Durchflussstellung, sodass die Zusatzfedern 322, 332 des zweiten und dritten Zusatzfedermoduls 32, 33 mittels des Fluids ihre Federkraft auf den Dämpfer 20 und somit auf die Fahrzeugkarosserie FK und die Fahrzeugachse FA übertragen. Die Zusatzfedern 322, 332 wirken in Reihe zueinander und parallel zu der Tragfeder 10, sodass sich als Formel für die Gesamtfederkonstante $k_{G2}$ des Feder-Dämpfersystems in der in Figur 2 dargestellten Schaltstellung der Sperrventile 314, 324, 334, 344

$$k_{G2} = k_T + \left(\frac{1}{k_{32}} + \frac{1}{k_{33}}\right)^{-1}$$

ergibt.

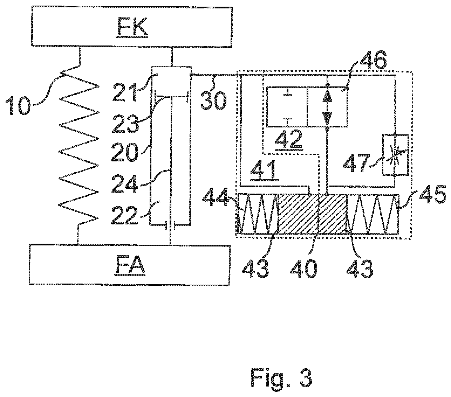

Figur 3 zeigt eine zu dem Feder-Dämpfersystem in Figur 1 alternative Ausführungsform, bei dem das erste und zweite Zusatzfedermodul 41, 42 einen gemeinsamen Zylinder 40 aufweisen, in dem die jeweiligen von den Zusatzfedern 44, 45 druckbeaufschlagten Zusatzbehälter angeordnet sind. Von den Zusatzfedermodulen 41, 42 umfasst nur das zweite Zusatzfedermodul 42 ein Sperrventil 46 zu dem das Drosselventil 47 parallel geschaltet ist. Durch die Schaltstellung des Sperrventils 46, das sich in seiner Durchflussstellung befindet, wirken die Zusatzfedern 44, 45 der Zusatzfedermodule 41, 42 in Reihe zueinander. Da wie bei Figur 1 beschrieben eine der Federkonstanten der Zusatzfedern 41, 42 sehr klein ist, wirken die Zusatzbehälter der Zusatzfedermodule 41, 42 im Wesentlichen als Ausgleichsbehälter für das durch die Kolbenstange 24 verdrängte Fluid ohne einen großen Einfluss auf die Gesamtfederkonstante $k_G$ des Feder-Dämpfersystems auszuüben. Die Gesamtfederkonstante $k_G$ des Feder-Dämpfersystems in Figur 3 entspricht daher im Wesentlichen der Federkonstante $k_T$ der Tragfeder.

Die Erfindung wird durch die anhängigen Ansprüche definiert.

In einer Variante der Erfindung könnten Beispielweise die jeweiligen Vorspannungen der Zusatzfedern durch eine jeweilige Vorspannmechanik mechanisch verstellbar sein.

**Patentansprüche**

1. Feder-Dämpfersystem für eine Radaufhängung eines Kraftfahrzeugs umfassend

eine Tragfeder (10) mit einer Federkonstanten $k_T$ und einen zu der Tragfeder (10) parallelgeschalteten und mit einem Fluid gefüllten Dämpfer (20),
wobei das Feder-Dämpfersystem ferner zumindest zwei Zusatzfedermodule (31, 32, 33, 34) umfasst, die jeweils einen Zusatzbehälter (311, 321, 331, 341) aufweisen,
wobei jeder Zusatzbehälter ein Zusatzbehältervolumen umfasst, das von einer Zusatzfeder (312, 322, 332, 342) mit einer Federkonstante $k_n$ druckbeaufschlagt ist,
und die Zusatzbehältervolumen jeweils über eine Fluidleitung (30) strömungswirksam mit einem Dämpferabschnitt (21) des Dämpfers (20) verbunden sind, dessen Dämpferabschnittvolumen bei der Druckstufe des Dämpfers (20) reduziert wird,
wobei zumindest ein Zusatzfedermodul der zumindest zwei Zusatzfedermodule (31, 32, 33, 34) ein steuerbares Sperrventil (314, 324, 334, 344) umfasst, mit dem die jeweilige Fluidleitung (30) sperrbar ist,
wobei der Zusatzbehälter ein Zylinder (311, 321, 331, 341) mit zwei in ihrem Volumen variablen, von einem verschiebbaren Trennkolben (313, 323, 333, 343) getrennten Zylinderkammern ist, wobei eine erste Zylinderkammer als das Zusatzbehältervolumen über die jeweilige Fluidleitung (30) mit dem Dämpferabschnitt (21) verbunden ist, dessen Dämpferabschnittvolumen bei der Druckstufe des Dämpfers (20) reduziert wird

und eine zweite Zylinderkammer die jeweilige Zusatzfeder (312, 322, 332, 342) aufnimmt, die mittels des Trennkolbens (313, 323, 333, 343) druckbeaufschlagend auf die erste Zylinderkammer wirkt

**dadurch gekennzeichnet, dass** der Trennkolben eine Membran zwischen einer der Zylinderkammern und einem von dem Trennkolben gebildeten Hohlraum aufweist.

2. Feder-Dämpfersystem nach Anspruch 1, wobei zumindest ein Zusatzfedermodul der zumindest zwei Zusatzfedermodule (31, 32, 33, 34) ein parallel zu dem Sperrventil (314, 324, 334, 344) wirkendes, die Strömung durch die jeweilige Fluidleitung drosselndes Drosselventil (315, 325, 335, 345) umfasst.

3. Feder-Dämpfersystem nach einem der vorhergehenden Ansprüche, wobei die jeweilige Zusatzfeder (312, 322, 332, 342) eines Zusatzfedermoduls der zumindest zwei Zusatzfedermodule (31, 32, 33, 34) eine Gasdruckfeder oder eine Schraubenfeder ist.

4. Feder-Dämpfersystem nach einem der vorhergehenden Ansprüche, wobei sich die Federkonstanten $k_n$ voneinander unterscheiden.

5. Feder-Dämpfersystem nach dem vorhergehenden Anspruch, wobei eine Federkonstante $k_n$ der Federkonstanten $k_n$ zwischen 1 und 2 N/mm ist.

6. Feder-Dämpfersystem nach einem der vorhergehenden Ansprüche, wobei die Federkonstanten $k_n$ der Zusatzfedern (312, 322, 332, 342) der Zusatzfedermodule (31, 32, 33, 34) ein Vielfaches voneinander sind.

7. Feder-Dämpfersystem nach einem der vorhergehenden Ansprüche, wobei zumindest zwei Zusatzfedermodule (41, 42) einen gemeinsamen Zylinder (40) aufweisen, der zumindest drei, jeweils durch einen Trennkolben (43) getrennte Zylinderkammern aufweist, wobei die erste Zylinderkammer die Zusatzfeder (44) eines ersten Zusatzfedermoduls (41) und eine dritte Zylinderkammer die Zusatzfeder (45) eines zweiten Zusatzfedermoduls (42) aufnimmt.

8. Feder-Dämpfersystem nach einem der vorhergehenden Ansprüche, wobei zumindest ein Zusatzfedermodul der Zusatzfedermodule (31, 32, 33, 34, 41, 42) integral, eine Baueinheit bildend mit dem Dämpfer ausgebildet ist.

9. Verfahren zur Federkonstantensteuerung mit einem Feder-Dämpfersystem nach einem der vorhergehenden Ansprüche, wobei das oder die Sperrventil(e) (314, 324, 334, 344, 46) der zumindest zwei Zusatzfedermodule (31, 32, 33, 34, 41, 42) jeweils durch eine Sperrventilsteuerung in Abhängigkeit einer zu erreichenden Gesamtfederkonstante $k_G$ den Fluidstrom zwischen den jeweiligen Zusatzbehältern (311, 321, 331, 341) und dem Dämpferabschnitt (21), dessen Dämpferabschnittvolumen bei der Druckstufe des Dämpfers (20) reduziert wird, sperrend oder freigebend angesteuert werden, sodass sich zumindest bei einem gleichen hydraulischen Übersetzungsverhältnis zwischen Dämpfer (20) und jedem der Zusatzfedermodule die Gesamtfederkonstante $k_G$ aus der Formel

$$k_G = k_T + \left( \sum \frac{1}{k_n} \right)^{-1}$$

ergibt, wobei in eine Summe aus den Kehrwerten der Federkonstanten $k_n$ nur die Federkonstanten $k_n$ der Zusatzfedermodule (31, 32, 33, 34, 41, 42) eingehen, deren Sperrventile (314, 324, 334, 344, 46) in einer den Fluidstrom freigebenden Stellung sind.

**Claims**

1. Spring-absorber system for a wheel suspension of a motor vehicle comprising
a suspension spring (10) with a spring constant $k_T$ and an absorber (20) connected in parallel with the suspension spring (10) and filled with a fluid,
wherein the spring-absorber system furthermore comprises at least two additional spring modules (31, 32, 33, 34), each having an additional container (311, 321, 331, 341),
wherein each additional container comprises an additional container volume, which is subjected to pressure by an additional spring (312, 322, 332, 342) with a spring constant $k_n$,
and the additional container volumes each have a fluidic connection via a fluid line (30) to an absorber section (21) of the absorber (20), the absorber section volume of which is reduced during the compression stage of the absorber (20),
wherein at least one additional spring module of the at least two additional spring modules (31, 32, 33, 34) comprises a controllable shut-off valve (314, 324, 334, 344) with which the respective fluid line (30) can be blocked,
wherein the additional container is a cylinder (311, 321, 331, 341) with two variable volume cylinder chambers separated by a movable separating piston (313, 323, 333, 343),
wherein a first cylinder chamber as the additional container volume is connected via the respective fluid line (30) to the absorber section (21), the absorber section volume of which is reduced during the compression stage of the absorber (20),
and a second cylinder chamber accommodates the respective additional spring (312, 322, 332, 342), which by means of the separating piston (313, 323, 333, 343) acts in a pressure-impinging manner on the first cylinder chamber,
**characterized in that**
the separating piston has a membrane between one of the cylinder chambers and a cavity formed by the separating piston.

2. Spring-absorber system according to Claim 1, wherein at least one additional spring module of the at least two additional spring modules (31, 32, 33, 34) comprises a throttle valve (315, 325, 335, 345) acting in parallel with the shut-off valve (314, 324, 334, 344) for throttling the flow through the respective fluid line.

3. Spring-absorber system according to one of the preceding claims, wherein the respective additional spring (312, 322, 332, 342) of an additional spring module of the at least two additional spring modules (31, 32, 33, 34) is a gas compression spring or a coil spring.

4. Spring-absorber system according to one of the preceding claims, wherein the spring constants $k_n$ differ from each other.

5. Spring-absorber system according to the previous claim, wherein one spring constant $k_n$ of the spring constants $k_n$ is between 1 and 2 N/mm.

6. Spring-absorber system according to one of the preceding claims, wherein the spring constants $k_n$ of the additional springs (312, 322, 332, 342) of the additional spring modules (31, 32, 33, 34) are multiples of each other.

7. Spring-absorber system according to one of the preceding claims, wherein at least two additional spring modules (41, 42) have a common cylinder (40) comprising at least three cylinder chambers each separated by a separating piston (43), wherein the first cylinder chamber accommodates the additional spring (44) of a first additional spring module (41) and a third cylinder chamber accommodates the additional spring (45) of a second additional spring module (42).

8. Spring-absorber system according to one of the preceding claims, wherein at least one additional spring module of the additional spring modules (31, 32, 33, 34, 41, 42) is embodied integrally so as to form a unit with the absorber.

9. Method for spring constant control with a spring-absorber system according to one of the preceding claims, wherein the shut-off valve(s) (314, 324, 334, 344, 46) of the at least two additional spring modules (31, 32, 33, 34, 41, 42) is/are each controlled by means of a shut-off valve controller to block or enable the fluid flow between the respective additional containers (311, 321, 331, 341) and the absorber section (21) depending on a total spring constant $k_G$ that is to be achieved, the absorber section volume of which is reduced during the compression stage of the absorber (20), so that at least with the same hydraulic transmission ratio between the absorber (20) and each of the additional spring modules, the total spring constant $k_G$ results from the formula

$$k_G = k_T + \left(\sum \frac{1}{k_n}\right)^{-1}$$

wherein only the spring constants $k_n$ of the additional spring modules (31, 32, 33, 34, 41, 42) with shut-off valves (314, 324, 334, 344, 46) in a position enabling the fluid flow are incorporated into a sum of the inverse values of the spring constants $k_n$.

## Revendications

1. Système d'amortisseur à ressort pour une suspension de roue d'un véhicule à moteur, comprenant :

un ressort de support (10), ayant une constante de rappel $k_T$, et un amortisseur (20) monté en parallèle au ressort de support (10) et rempli d'un fluide,
le système d'amortisseur à ressort comprenant en outre au moins deux modules de ressort auxiliaires (31, 32, 33, 34), qui comprennent chacun un contenant auxiliaire (311, 321, 331, 341), chaque contenant auxiliaire comprenant un volume de contenant auxiliaire, qui est sollicité en pression par un ressort auxiliaire (312, 322, 332, 342) ayant une constante de rappel $k_n$,
et les volumes de contenant auxiliaire étant chacun reliés fluidiquement par l'intermédiaire d'une conduite de fluide (30) avec une section d'amortisseur (21) de l'amortisseur (20), dont le volume de section d'amortisseur est réduit lors de la phase sous pression de l'amortisseur (20), au moins un module de ressort auxiliaire parmi les au moins deux modules de ressort auxiliaires (31, 32, 33, 34) comprenant une soupape d'arrêt commandable (314, 324, 334, 344), avec laquelle la conduite de fluide respective (30) peut être bloquée,

le contenant auxiliaire étant un cylindre (311, 321, 331, 341) muni de deux chambres de cylindre de volume variable, séparées par un piston de séparation déplaçable (313, 323, 333, 343),

une première chambre de cylindre étant reliée en tant que volume de contenant auxiliaire par l'intermédiaire de la conduite de fluide respective (30) avec la section d'amortisseur (21), dont le volume de section d'amortisseur est réduit lors de la phase sous pression de l'amortisseur (20),

et une deuxième chambre de cylindre recevant le ressort auxiliaire respectif (312, 322, 332, 342), qui agit par sollicitation en pression sur la première chambre de cylindre au moyen du piston de séparation (313, 323, 333, 343),

**caractérisé en ce que**

le piston de séparation comprend une membrane entre une des chambres de cylindre et une cavité formée par le piston de séparation.

2. Système d'amortisseur à ressort selon la revendication 1, au moins un module de ressort auxiliaire parmi les au moins deux modules de ressort auxiliaires (31, 32, 33, 34) comprenant une soupape d'étranglement (315, 325, 335, 345) agissant en parallèle à la soupape d'arrêt (314, 324, 334, 344), étranglant l'écoulement à travers la conduite de fluide respective.

3. Système d'amortisseur à ressort selon l'une quelconque des revendications précédentes, le ressort auxiliaire respectif (312, 322, 332, 342) d'un module de ressort auxiliaire parmi les au moins deux modules de ressort auxiliaires (31, 32, 33, 34) étant un ressort à pression de gaz ou un ressort hélicoïdal.

4. Système d'amortisseur à ressort selon l'une quelconque des revendications précédentes, les constantes de rappel $k_n$ différant les unes des autres.

5. Système d'amortisseur à ressort selon la revendication précédente, une constante de rappel $k_n$ parmi les constantes de rappel $k_n$ étant comprise entre 1 et 2 N/mm.

6. Système d'amortisseur à ressort selon l'une quelconque des revendications précédentes, les constantes de rappel $k_n$ des ressorts auxiliaires (312, 322, 332, 342) des modules de ressort auxiliaires (31, 32, 33, 34) étant des multiples les unes des autres.

7. Système d'amortisseur à ressort selon l'une quelconque des revendications précédentes, au moins deux modules de ressort auxiliaires (41, 42) présentant un cylindre commun (40), qui comprend au moins trois chambres de cylindre, à chaque fois séparées par un piston de séparation (43), la première chambre de cylindre recevant le ressort auxiliaire (44) d'un premier module de ressort auxiliaire (41) et une troisième chambre de cylindre recevant le ressort auxiliaire (45) d'un deuxième module de ressort auxiliaire (42).

8. Système d'amortisseur à ressort selon l'une quelconque des revendications précédentes, au moins un module de ressort auxiliaire parmi les modules de ressort auxiliaires (31, 32, 33, 34, 41, 42) étant configuré d'un seul tenant, formant une unité de construction avec l'amortisseur.

9. Procédé de commande de constante de rappel avec un système d'amortisseur à ressort selon l'une quelconque des revendications précédentes, la ou les soupapes d'arrêt (314, 324, 334, 344, 46) des au moins deux modules de ressort auxiliaires (31, 32, 33, 34, 41, 42) étant à chaque fois commandées pour bloquer ou libérer par une commande de soupape d'arrêt en fonction d'une constante de rappel totale $k_G$ à atteindre du courant de fluide entre les contenants auxiliaires respectifs (311, 321, 331, 341) et la section d'amortisseur (21), dont le volume de section d'amortisseur est réduit lors de la phase sous pression de l'amortisseur (20), de telle sorte qu'au moins à un rapport de transmission hydraulique identique entre l'amortisseur (20) et chacun des modules de ressort auxiliaires, la constante de ressort totale $k_G$ soit donnée par la formule

$$k_G = k_T + \left( \sum \frac{1}{k_n} \right)^{-1}$$

uniquement les constantes de rappel $k_n$ des modules de ressort auxiliaires (31, 32, 33, 34, 41, 42) dont les soupapes d'arrêt (314, 324, 334, 344, 46) sont dans une position libérant le courant de fluide étant incluses dans une somme des valeurs inverses des constantes de rappel $k_n$.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5347457 A
- WO 2011034702 A1
- DE 8905062 U1
- EP 1757473 A2
- JP 2006242277 A
- US 4975849 A
- JP 53026021 A